# EUROPEAN PATENT SPECIFICATION

(11) **EP 4 158 602 B1**
(45) Date of publication and mention of the grant of the patent: **29.04.2026**
(21) Application number: 21731393.1
(22) Date of filing: 06.05.2021
(51) Int. Cl.: G07C 9/00, G07C 9/25, G06V 40/16

(54) **BUILDING SYSTEM WITH CREDENTIAL AND BODY TEMPERATURE VERIFICATION FEATURES**
GEBÄUDESYSTEM MIT BERECHTIGUNGS- UND KÖRPERTEMPERATURVERIFIZIERUNGSFUNKTIONEN
SYSTÈME D'IMMEUBLE DOTÉ D'ÉLÉMENTS POUR VÉRIFIER L'IDENTITÉ ET LA TEMPÉRATURE CORPORELLE

(30) Priority: 26.05.2020 EP 20176560
(43) Date of publication of application: 05.04.2023
(73) Proprietor: INVENTIO AG, 6052 Hergiswil (CH)
(72) Inventor: CHEN, Samuel, Hong Kong Chai Wan (HK); HÄFLIGER, Stefan, 6024 Hildisrieden (CH)
(74) Representative: Inventio AG
(86) International application number: PCT/EP2021/062001
(87) International publication number: WO 2021/239431

(56) References cited:
- WO-A1-2017/057274
- WO-A2-2015/040001
- CN-A- 108 597 067
- US-A1- 2006 206 724
- US-A1- 2012 271 712

## Description

The present disclosure of various embodiments generally relates to an elevator system and its operation. More specifically, the various embodiments described herein relate to an elevator system providing improved passenger comfort and confidence when using an elevator, and a method of controlling the operation of such an elevator system.

Multi-story residential and commercial buildings often have elevator systems to transport users (e. g., tenants and visitors) from a boarding floor to a destination floor. Elevator systems and elevator control technologies implemented therein are generally known. Some of these buildings may further have a physical building control system to allow only authorized users access the building and/or areas within the building. Upon a user presenting some form of credential (e. g., key, optical code (e. g., barcode, QR code), **RFID** badge or biometric feature), a physical building control system releases or unlocks a physical barrier (e. g., a gate, door, or turnstile) to grant access to the authorized user. US 9,077,716 describes a building control system, in which a mobile electronic device communicates with an electronic door lock by means of a Bluetooth or WLAN radio link, and with a web server by means of a WAN (Wide Area Network) radio link to open the electronic lock. For example, one of these building control systems may be configured to automatically enter an elevator call for the authorized user based on a default destination stored in a user profile.

**In** addition to providing transportation and physical access control, building owners and/or building operators (hereinafter referred to as "building management") provide for a safe and clean environment within buildings. Of particular concern are elevator lobbies and elevator cars where users wait or stand in relatively close proximity to each other. **In** these areas, users may worry that by-standing users suffer from a contagious medical condition (with or without visible or noticeable symptoms) and spread bacteria and/or viruses to healthy users. To address such concerns, building management may enhance its cleaning and disinfection efforts, and/or set up procedures where building personnel is tasked to measure users' body temperatures. For that purpose, handheld non-contact infrared thermometers may be used. A user that has an increased body temperature may be singled out.

US 2006/206724 A1 discloses a biometric-based security system having an audio input module to receive and digitize a spoken utterance from a person and a video input module to receive multiple digital images of the person. In one example, the security system screens users for health risks using infrared technology that measures body temperature.

A user with an elevated temperature may be prevented from entering public areas.

WO 2015/040001 A2 discloses a device for identifying a person having a camera for capturing a reflection image of a face of a person in the visible spectral range, a thermal imaging camera for capturing an infrared emissions image of the face, a real-image analysis and an infrared image analysis. The infrared image analysis detects a temperature distribution from the infrared image data and determines whether the temperature distribution at least partially approaches a temperature distribution in the face of a living person, and if this is the case, instructs the output control to output the personal identification.

CN 108 597 067 A discloses a control system having an on-line temperature measurement system, a certificate identifying and reading instrument, and a camera. The on-line temperature measurement thermal imaging system and the certificate identifying and reading instrument are positioned at the upper surface of a gate. The system can realize short-distance accurate temperature measurement, automatic personnel information acquisition.

WO 2017/057274 A1 provides a security gate, a group management system of an elevator, and an elevator system, which can restrict entry of a user into a specific area of a building when a user of the building is generating heat.

Such efforts and procedure may increase a user's confidence when seeking access to an access-restricted building area or using an elevator. However, the procedures involving such temperature measurements require building personnel and are relatively slow. In addition, singling out users may be viewed as invading a user's right to privacy. There is, therefore, a need for a technology that overcomes at least one of these issues.

The invention is defined in the appended set of claims.

One aspect of such technology relates to a building system, in particular an elevator system, a physical access control system or a combined elevator and physical access control system. The building system includes a controller system configured to control the building system to perform a building action, and a credential acquisition unit communicatively coupled to the controller system and configured to acquire a credential presented by a user. The credential determines whether or not the user is an authorized user within a building. A camera system of the building system has a thermographic camera configured to operate in an infrared optical spectrum and to generate an infrared image of at least a part of a face of the user. An image processing system is communicatively coupled to the camera system and the controller system. The image processing system is configured to process the infrared image to determine if it includes an area of the user's face having a temperature value that is higher than a set threshold temperature value and to generate a first result signal indicative of whether or not the temperature value is higher than the threshold temperature value. The controller system is configured to enable or disable the building action as a function of the acquired user credential and the result signal.

Another aspect relates to method of operating a building system, in particular an elevator system, a physical access control system or a combined elevator and physical access control system installed in a building. The building system includes a controller system configured to control the building system to perform a building action, a credential acquisition unit communicatively coupled to the controller system, a camera system having a thermographic camera configured to operate in an infrared optical spectrum, and an image processing system communicatively coupled to the camera system and the controller system. According to the method, a credential presented by a user is acquired using the credential acquisition unit. The credential determines whether or not the user is an authorized user within the building. The method includes operating the thermographic camera to generate an infrared image of at least a part of a face of the user, and processing, using the image processing system, the infrared image to determine if it includes an area of the user's face having a temperature value that is higher than a set threshold temperature value and to generate a first result signal indicative of whether or not the temperature value is higher than the threshold temperature value. The method includes further controlling the building system, by the controller system, to enable or disable the building action as a function of the acquired user credential and the first result signal.

The technology described herein provides that a building system operates in consideration of a user's body temperature measured at the time the user requests a building action. **In** certain embodiments, this allows recognizing a feverish user at a relative early moment in time, e.g., at a building entry or shortly thereafter, in particular before the user mingles with other users in the building when being provided with the building action. The risk of the feverish user potentially infecting other users is, therefore, reduced.

Measuring a user's body temperature as early as possible allows undertaking mitigating measures. In one embodiment, the building system measures a user's body temperature automatically and reacts as a function of the acquired user credential and the result signal. For example, controlling the building system involves registering an elevator call only if the user is an authorized user and the temperature value is lower than the threshold temperature value. If, however, the measured body temperature is elevated, i. e., above the set threshold temperature value, due to the user being feverish, the building system may have one or more predetermined (mitigating) procedures for responding to such a feverish user.

In one embodiment, a mitigating procedure is executed in response to the first result signal indicating that the user's face temperature value is higher than the threshold temperature value. The mitigating procedure includes one of:
- denying the building action to the user,
- disabling a user terminal for entry of an elevator call by the user,
- enabling a user terminal for entry of an elevator call by the user and refraining from registering the elevator call,
- notifying the user about being subject to a secondary processing, and, if the secondary processing results in the user not having an elevated body temperature, providing the user a secondary credential authorizing provisioning of the building service without a travel restriction, and
- notifying the user about being subject to a secondary processing, and, if the secondary processing confirms the user having an elevated body temperature, providing the user a secondary credential authorizing provisioning of the building service with a travel restriction, wherein the travel restriction includes that an empty elevator car is assigned to the user or that an elevator car is assigned to the user that is designated for transporting other users having elevator body temperatures.

Depending on how a building's management decides to handle feverish users, one or more of these procedures may be implemented in the building.

In one embodiment, the credential acquisition unit and the camera system are arranged in a user terminal accessible by the user. This facilitates measuring a user's body temperature at the time the user requests a building action. In another embodiment, the camera system may be arranged at a location that is spaced apart from where the user terminal is arranged.

As to the kind of credentials used in the building, the technology described herein provides flexibility. The credential acquisition unit may include at least one of a radio-frequency based reader configured to read coded information from a radio-frequency based data carrier, a scanner configured to process an optical code read from a data carrier and an image capture device configured to acquire a biometric credential. At least some of these exemplary credential acquisition units can be used without the user having to physically touch the user terminal that is accessible for all users. Such touchless acquisition of a credentials reduces the risk that bacteria or viruses spread from one user to another user.

In one embodiment, a user's face serves as a biometric credential it can be obtained without the user having to touch the user terminal or the like. For that purpose, the credential acquisition system includes the image capture device configured to operate in a visible optical spectrum and to generate a digital image of at least a part of the user's face. The image processing system is configured to generate from the digital image a real-time facial template of facial features of the user, to compare the real-time facial template with a plurality of stored reference facial templates of facial features of authorized users and to generate a second result signal indicative of whether or not the real-time facial template matches one of the reference facial templates. The controller system is configured to enable or disable the building action as a function of the first and second result signals.

In one embodiment, the building system includes a memory device having a database storing a plurality of user profiles. Each user profile is assigned to a user authorized to enjoy at least one specified building action. The memory device may be located at a central location within the building or remote from the building and accessible by means of a communications network. In another embodiment, the user profile may be created and stored in a database of a building management system, wherein the building system may access this database by means of a communications network. As to where the user profiles are maintained, there is flexibility.

The user profiles may serve different purposes. In certain embodiments, at least one of the user profiles includes a reference facial template of an authorized user, and at least one user profile further includes at least one access right and/or at least one default destination floor.

In one embodiment, the user terminal includes a first credential reader comprising a radio-frequency module configured to communicate with a radio-frequency module of a first data carrier presented by the user. In one embodiment, the user terminal further includes a second credential reader comprising a camera configured to obtain an optical code from a second data carrier presented by the user. In certain embodiments, these additional credential readers provide that the user, after secondary processing, can enjoy the building action despite initially being determined (potentially erroneously) as unauthorized or as having an elevated body temperature.

In one embodiment, the building system includes an information device configured to generate an alarm signal if the user is, based on the credential presented to the credential acquisition unit, not an authorized user and/or if the temperature value is higher than the threshold temperature value. The alarm signal may be used to inform the user and/or, for example, building personnel. In certain embodiment, building personnel may then subject the user to secondary processing.

Various aspects of the improved technology are described in greater detail below with reference to exemplary embodiments in conjunction with the drawings. In the figures, identical elements have identical reference numerals. In the figures:
- Fig. 1: shows a schematic illustration of an exemplary situation in a building having a building system;
- Fig. 2: shows a schematic illustration of an exemplary embodiment of one aspect of the building system shown in Fig. 1; and
- Fig. 3: shows a flow chart of an exemplary embodiment of a method of operating the building system.

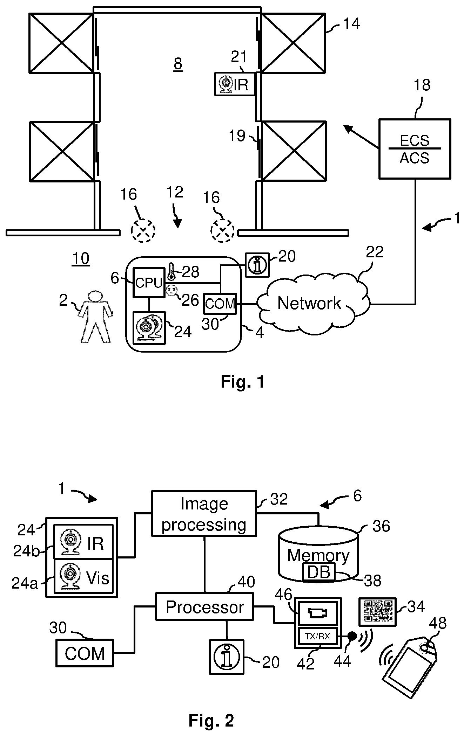

**Fig. 1** is a schematic illustration of an exemplary embodiment of a building system 1. The building system 1 may be configured for a variety of different applications. For example, the building system 1 may include an elevator system to transport users 2 from a boarding floor to a destination floor within a building. An elevator controller (ECS) controls the operation of the elevator system. In another example, the building system 1 may include a physical access control system to control access to an access-restricted area of the building. For example, access may be controlled at a building entrance, at a specified access-restricted zone within the building and/or at a building floor (e. g., a lobby) where users 2 can transfer to and from an elevator. An access controller (ACS) controls the operation of the physical access control system. It is contemplated that the building may be equipped with one of these systems or with both an elevator system and a physical access control system; the latter being illustrated in **Fig. 1****.** In the illustrated embodiment, the building system 1 performs an elevator-control function (e. g., transporting the user 2 from the boarding floor to the destination floor) and an access-control function (e. g., granting the user 2 access to the access-restricted area and/or the elevators) which are examples of a building action.

In the exemplary embodiment shown in **Fig. 1**, the building has an access-restricted zone 8 and a zone 10 that is not subject to an access restriction; the zone 10 is also referred to as public zone 10. The access-restricted zone 8 may be an elevator hall where users 2 transfer to and from one or more elevator cars. In another embodiment the access-restricted zone 8 may be a vestibule to a room 14, for example, offices, apartments, and halls. Hereinafter, the room 14 is an elevator car and embodiments of the technology are described with reference to the elevator car 14. An access 12 (with or without a physical barrier) separates the public zone 10 from the access restricted zone 8.

Referring initially to the physical access control, the access-control function of the building system 1 controls access to the access-restricted zone 8 so that only authorized users 2 can enter that zone 8. A user 2 is authorized if a credential (e. g., key, (alpha-) numerical code, optical code (e. g., barcode, QR code), RFID badge or biometric feature) presented by the user 2 is determined to be valid. For example, the access 12 may be provided with a barrier (e.g., a door, a gate, a turnstile, or other physical or non-physical (e. g., a light/sensor barrier) barrier) controlled by the building system 1. For purposes of illustration, a user terminal 4 of the building system 1 is shown in **Fig. 1** as being situated at the access 12; in addition, turnstiles 16 are indicated as exemplary physical barriers. For example, the user terminal 4 may be arranged at a gate or a turnstile 16. Those skilled in the art will recognize that in a specific implementation, the user terminal 4 may be arranged in different ways and at different locations.

In another exemplary embodiment, the user terminal 4 of the building system 1 may be situated at an access to at least one room 14, possibly at each access. Depending on the nature of the room 14, the access comprises, for example, an office door, a story door, an apartment door or an elevator door 19, each of which then represents a physical barrier. In this exemplary embodiment, each room 14 corresponds to an access-restricted zone 8, and the area in front of the access corresponds to the public zone 10. Hereinafter, the room 14 is also referred to as "elevator car 14". In response to determining that the presented credential is valid, the access-control function of the building system 1 unlocks, for example, an electronic lock of an office door or apartment door. In an elevator-related application, the building system 1 may, for example, prevent the departure of an elevator car 14 when an unauthorized user 2 (i. e., user 2 presents no or an invalid credential) enters or wishes to enter the elevator car 14.

Referring to the elevator-control function of the building system 1, an elevator call may be registered for the user 2 at about the time the user 2 presents a valid credential. Upon determining that the credential is valid, an elevator operating panel (e. g., provided by the terminal 4) may be switched to an enabled (unlocked) state to allow entry of an elevator call by the user 2. Depending on the control technology implemented in the elevator system (conventional up/down control or destination call technology), the user 2 may enter at the enabled elevator operating panel a desired travel direction (upwards or downward) or a destination floor. Alternatively, if the credential is valid, an elevator call may be automatically entered for the user 2; the elevator call may be based on a default destination floor stored in a user profile set up for the user 2. In one embodiment, the user 2 may change the default destination floor at the elevator operating panel. In response to an elevator call being entered in one of these possibilities, the elevator controller registers the elevator call and initiates its execution.

As indicated in the embodiment of **Fig. 1**, the user terminal 4 of the building system 1 is situated at the access 12 and communicatively coupled to a network 22. The network 22 communicatively couples the user terminal 4 to a controller system 18 configured to control the building system 1 to perform a building action. The illustrated user terminal 4 includes a camera system 24 and a processing system (CPU) 6 as part of an image processing system, an information device 20, and a communications unit (COM) 30 that couples the user terminal 4 to the controller system 18. The image processing system (6, 24) is configured to operate as a facial recognition system (illustrated in **Fig. 1** by a face symbol 26) and as a thermal imaging system (illustrated in **Fig. 1** by a temperature symbol 28). Accordingly, in the illustrated example, the user terminal 4 includes components of the facial recognition system and components of the thermal imaging system. Additional components of the user terminal 4 are shown in **Fig. 2** and described below.

The facial recognition system is one example of a credential acquisition unit 24a shown in **Fig. 2** and communicatively coupled to the controller system and configured to acquire a credential presented by the user. The credential determines whether or not the user is an authorized user within the building. The skilled person will appreciate that for verifying authorizations other examples of a credential acquisition unit may be used, for example, a radio-frequency based reader (RFID reader) configured to read coded information from a radio-frequency based data carrier, a scanner configured to process an optical code read from a data carrier or a keyboard for entry of a numeric code. In the embodiments of the present technology described hereinafter, the credential acquisition unit 24a is configured for use in a facial recognition system.

A facial recognition system is a technology capable of identifying or verifying a user 2 from a digital image or a video frame generated by a video source operating in the visible optical spectrum. Generally, a facial recognition system compares selected facial features from a given image with facial features ("faces") stored in a database. A thermal imaging system is a technology ("thermography") that uses a thermographic camera (also called an infrared camera or thermal imaging camera or thermal imager) to create an image of an object (here the user's face) based on infrared radiation (wavelengths from about 1 µm to about 14 µm) emitted by the object.

The camera system 24 operates according to these technologies when the user 2 approaches the user terminal 4 at the access 12 and the user's face is within a detection range of the camera system 24. The images produced by the camera system 24 are then subject to further processing. In the illustrated embodiment, the camera system 24 (including other components of the image processing device) is arranged in the user terminal 4; preferably, the arrangement is such that an unobstructed view of the user 2 is obtained. Alternatively, the camera system 24 (including other components of the image processing device) may be situated separate from the user terminal 4 as a separate unit, for example, spatially separate from the user terminal 4 in an area around the access 12. In one embodiment, the camera system 24 is situated so that essentially only the one user 2 is detected, who actually desires a service or building action (transport or access) provided by the building system 1.

In the situation shown in **Fig. 1**, the technology described herein may be advantageously used to operate the building system 1 with as little human interaction as possible and in a way so that users 2 feels more confident using one or more building actions provided by the building system 1. Summarized briefly and by way of example, the building system 1 according to one exemplary embodiment processes images generated by the camera system 24 to determine if a user 2 is an authorized user and if the user 2 is afebrile (i. e., does not have fever/an increased body temperature). That is, only if these two conditions are met, the user 2 can seamlessly proceed to use the building actions. For example, the building system 1 only then automatically registers for the user 2 an elevator call to a default destination floor or enables the user terminal 4 for the user 2 to enter an elevator call. In case an elevated temperature is detected, call entry and/or call registration is blocked. If the building system 1 determines, for example, that the user 2 has an increased body temperature, for example, building personnel is notified to take care of such a situation; for example, the user 2 may be subject to secondary processing separate from other users 2, as described elsewhere in this text. **Fig. 2** shows a schematic illustration of one exemplary embodiment of one aspect of the building system 1, i. e., the aspect that is related to interfacing with the user 2. In one exemplary embodiment, the building system 1 has a modular structure and comprises components and subsystems that may be arranged according to a desired configuration of the building system 1. Some components may be arranged in the user terminal 4 while others may be arranged remote from the user terminal 4; for example, all or certain tasks related to the image processing may be performed at a central location (within or remote from the building) that services a plurality of user terminals 4.

As shown in **Fig. 2**, the building system 1 includes the camera system 24, a memory device 36 storing a database 38, a processor 40 and an image processing module 32 communicatively coupled to the camera system 24, the memory device 36 and the processor 40. Also shown are the information device 20 and the communications unit 30 which are communicatively coupled to the processor 40. The camera system 24 has an image capture device 24a (labeled "Vis") and a thermographic camera 24b (labeled "IR"). The image capture device 24a is in one embodiment a digital camera (it may also be a dot projector sensor); hereinafter, the image capture device 24a is referred to as "digital camera 24a". The digital camera 24a is configured to operate in a visible optical spectrum (wavelengths between about 400 nm and about 800 nm) and to generate a digital image of at least a part of a face of the user 2. The thermographic camera 24b is configured to operate in an infrared optical spectrum (wavelengths between about 1 µm and about 14 µm) and to generate an infrared image of at least a part of the user's face.

The digital camera 24a may have selectable and/or adjustable properties; camera images are thus present in this exemplary embodiment as digital datasets. The properties of the digital camera, for example, resolution (for example, indicated in megapixels), exposure and focal length, are selected or set so that a camera image (digital image) may be evaluated and the user's face may be recognized in evaluable quality on the digital image. A digital image is, for example, in the JPEG format, but it may also be in a different format, for example, in the BMP format, in the JPEG2000 format or a base64 image string.

The thermographic camera 24b may have an image sensor unit that generates a monochrome image or a color image unit that generates a color image. The images generated by such sensor units detect changes in emitted infrared radiation across a user's face. The changes in intensity relate to changes in temperature across the user's face, the highest intensity usually being indicative of the highest temperature. To ensure that the thermographic camera 24b can accurately measure the radiation it detects, the thermographic camera 24b is calibrated. Calibration is the process of correlating what the image sensor "sees" (infrared radiation) with known temperatures, e. g., selected for measurements at a certain temperature range. For human body applications, for example, the temperature range may be between 20°C and 50°C.

The camera system 24 may be equipped with a sensor module or may be connected to a separate sensor module, which activates the camera system 24 when it detects the presence of a user 2 in the detection area of the camera system 24. The sensor module may comprise, for example, a proximity sensor, which may be designed as an ultrasonic sensor, an infrared sensor or an optical sensor (for example, light barrier, brightness sensor). Alternatively, the presence of a user 2 in the detection area of the camera system 24 may be recognized using the camera system 24. If, for example, the user 2 enters the detection area and the camera system 24 is always in an active state, the camera system 24 records changes in front of an essentially static background; these changes indicate a user's presence.

For each registered user 2, a user profile is created in the building system 1, i. e., it is stored as a dataset in the database 38. In the illustrated embodiment, the database 38 is set up in the memory device 36, which may be any device configured to store digital data, for example, a hard disk drive (HDD) or CD/DVD drive, a semiconductor drive/solid state disk (SSD), or combinations thereof, or other digital data memory devices for digital data. The user profile includes personal data of the user 2 (for example, name, reason for authorization (resident, employee, external service provider) and facial features in the form of a facial template), access authorizations (for example, specific rooms 14 and floors) and possibly temporal access restrictions (for example, access from Monday to Friday, from 7:00am to 8:00pm). As an alternative to creating the user profile in the building system 1, the user profile may be created in a database of a building management system, wherein the building system 1 may access this database by means of a communications network. In **Fig. 2**, the memory device 36 is coupled to the image processing device 32 to illustrate that the image processing device 32 accesses the user profiles, however, it contemplated that the memory device 36 may instead be coupled to the processor 40 or the communications unit 30, e. g., because the memory device 36 is located remotely.

The image processing module 32 is configured to process the digital image generated by the digital camera 24a by executing a computer-aided method for image processing. Image processing methods are known, for example from US Pat. No. 8,494,231 B2. An introduction to the field of image processing for the purpose of facial recognition is described in the publication "Gesichtserkennung" ["Facial Recognition"] of the German Federal Office for Information Security (available under the topic of biometrics at the Internet address www.bsi.bund.de). This publication distinguishes between the three main steps "Create template", "Create reference dataset" and "Compare facial images". In order to make the comparison of two facial images as simple and quick as possible, the features of a face are ascertained and stored in the form of a feature dataset referred to as a "template". When the face on an image of a user has been found and standardized, features in addition to the eyes, nose, and mouth/chin are sought, measured, and related to each other. These extracted features are encoded, compressed, and stored as a feature dataset (template). The similarity of the templates of two facial images are defined by combining them using a mathematical algorithm. This results in a degree of similarity of the templates. If the result is within certain tolerance limits, the two templates, and thus their underlying facial images, are classified as identical.

As illustrated in **Fig. 2**, the image processing module 32 is communicatively coupled to the memory device 36. At least some of the user profiles stored in the database 38 include facial templates of the respective users 2. The facial templates may be generated, for example, at the time the users 2 are registered as authorized users 2. These stored facial templates are referred to as reference facial templates. The image processing module 32 is configured to access the memory device 36 and the database 38 for searching for a reference facial template that can be classified to be identical to a real-time facial template of a user 2 generated when the user 2 approaches the digital camera 24a. The image processing module 32 generates a result signal indicative of whether or not such a reference facial template is stored in database 38.

Referring to the infrared image generated by the thermographic camera 24b, the image processing module 32 is configured to process the infrared image. The processing includes comparing the temperatures corresponding to the intensities across the user's face with a threshold temperature value. The threshold temperature value is set, for example, to 37.5°C. If the image processing module 32 determines that an area of the user's face has a temperature that deviates from the normal body temperature of about 37°C, e. g. is at or above that threshold temperature value, the user 2 is deemed to have a medical condition accompanied with an elevated temperature (fever). The image processing module 32 generates a result signal indicative of whether or not the user 2 has an elevated temperature.

The image processing system, hence, is configured to generate two result signals; one indicates whether or not the user 2 is authorized based on comparing the real-time facial template of the user 2 with the reference facial templates. In this process of verifying the authorization, the user's face serves as a biometric credential implemented in the building system 1. The other result signal indicates whether or not the user 2 has a medical condition involving an elevated body temperature based on comparing temperatures corresponding to the intensities of infrared radiation across the user's face with a threshold temperature value. The image processing module 32 transmits the result signals to the processor 40 for further analysis.

The processor 40 is configured to analyze the received result signals according to a specified algorithm. For example, the algorithm determines that a building action can be performed if the result signals indicate that the user 2 is authorized and does not have an elevated body temperature. If, however, the result signals indicate that the user 2 is not recognized as being authorized or that the user 2 has an elevated, the algorithm determines that the building action cannot be performed for the user 2. In one embodiment, the algorithm may allow an unauthorized user 2 having an elevated body temperature to enter a call to reach, for example, a public floor, but require that user 2 to travel alone, e. g, by assigning an empty elevator car 14 to the unauthorized user. The processor 40 is configured to transmit the result of the analysis via the communications unit 30 to the controller system 18 configured to enable or disable the building action as a function of the first and second result signals. For example, the controller system 18 controls the building system 1 so that the user 2 is granted or denied access. If, for example, a physical barrier (for example, turnstile 36 in **Fig. 1**) separates the zones 8, 10, a control signal releases or blocks the barrier. Depending on the building system, granting access may include registering an elevator call for the user 2, or if no access control is provided, the building action may involve registering an elevator call.

In the illustrated embodiment, the processor 40 is configured to indicate the result of the analysis via the information device 20. The information device 20 may be arranged and configured depending on the building system 1. The information device 20 may be noticeable (by means of audio and/or vision) by the user 2 and/or, for example, building personnel; it may display text, symbols or pictograms, or generate light of different colors (e. g., a green lamp indicates that the user 2 can proceed). For example, if the mentioned zone separation occurs without a physical barrier, in the case of an unauthorized or feverish user 2, the control signal activates, for example, the information device 20 to generate an alarm, or to alert building personnel. Exemplary use cases are described elsewhere in this text.

In the illustrated embodiment of **Fig. 2**, the building system 1 includes further means for obtaining a user's credential. A first credential reader (42, 44) is coupled to the processor 40 and configured to read data from a first data carrier 48 presented by the user 2. The first credential reader includes a radio-frequency module 42 and an antenna 44; in one embodiment the first credential reader is configured as an RFID reader and the first data carrier 48 is an RFID transponder. A second credential reader 46 is coupled to the processor 40 and configured to read an optical code from a second data carrier 34 presented by the user 2. The second credential reader 46 may include a camera or scanner to read a barcode, quick response (QR) code, a color code, or any other optical, printed or displayed on the second data carrier 34 (e. g., configured as a badge, fob, or smartphone). While **Fig. 2** shows the two credential readers, it is contemplated that only of them may be provided, or that none is provided at all. The two credential readers may be used, for example, as backup credential readers in case non-registered users (e. g. visitors) are in the building requesting a building action or the face recognition does not recognize a registered user. Exemplary use cases are described elsewhere in this text.

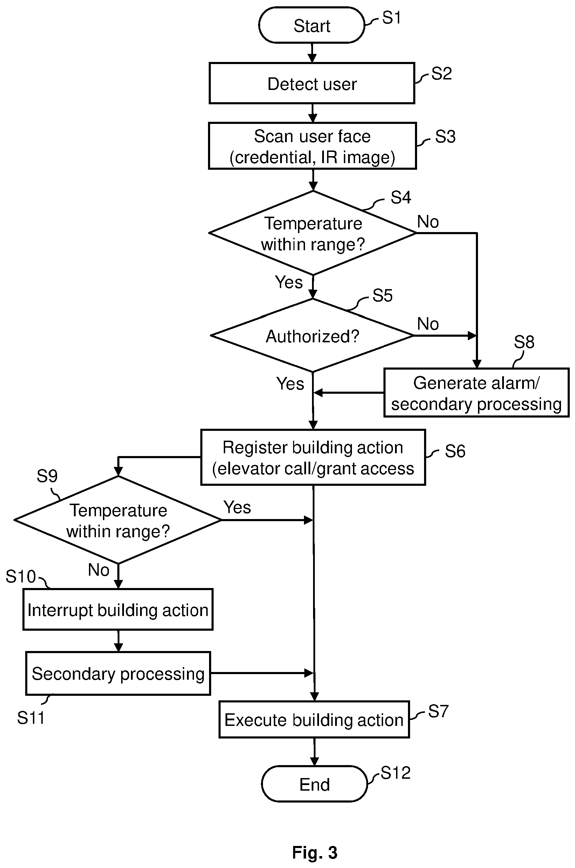

With the understanding of the basic system components and their functionalities described above, a description of an exemplary method of operating the building system 1 is provided hereinafter in connection with **Fig. 3****.** The description is made with reference to a user 2 who desires to enter the access-restricted zone 8 at the entrance 12, for example, to use an elevator there. The exemplary shown method begins with a step **S1** and ends with a step **S12.**

At a step **S2,** a user 2 is detected. As mentioned above, the user 2 may be detected by the camera system 24 or a sensor system when the user 2 is in a detection area. For example, if the user 2 desires access to the access-restricted zone 8, the user 2 will be moving in the public zone 10, for example, coming from a building main entrance, in the direction of the access 12. The user terminal 4 and/or the camera system 24 may be in an inactive or stand-by state and become activated by the approaching user; alternatively, the user terminal 4 and/or the camera system 24 camera system 24 may be always in an active state.

Proceeding to a step **S3**, the user's face is scanned. By scanning the user's face, the user's credential (face) and temperature distribution across the user's face can be obtained. At the time the user 2 arrives in the detection area of the camera system 24 situated there, the digital camera 24a produces one or multiple digital images or a video recording, each of which is available as a digital dataset and is stored temporarily for further processing. At essentially the same time, the thermographic camera 24b produces the infrared image. The infrared image may be stored temporarily for further processing. The image processing module 32 ascertains the real-time template from the dataset, as discussed elsewhere in this description.

Proceeding to a step **S4**, it is determined whether the user's body temperature is with the preset temperature range. The temperature range may be set between about 36°C and 37.5°C. If the user's body temperature is within the temperature range, i. e., the user 2 does not have a medical condition involving a body temperature that deviates from the normal body temperature of about 37°C, in particular an elevated body temperature, the method proceeds along the YES branch to a step **S5**; otherwise the method proceeds along the NO branch to a step **S8.**

Proceeding to the step **S5**, it is determined whether the user 2 is authorized. If the real-time template of the user 2 has been ascertained (step **S3**), the image processing module 32 starts a search algorithm in order to check whether the ascertained real-time template is assigned to a registered user. For example, the user profiles in the database 38 are searched by means of the real-time template ascertained. When searching, it is checked whether the real-time template matches a reference template to a specified degree. In one exemplary embodiment, the real-time template and the reference templates each comprise a specified number of specified facial parameters and their values (for example, eye distance, mouth width, distance between lip top edge and lip bottom edge, distance between nose and lip bottom edge, etc.). During the search, the parameter values of the real-time template are compared with the parameter values of the reference templates. There is a match when the degree of similarity of the templates is at least equal to the specified degree. The specified degree indicates a percentage match of the facial parameters of the real-time template with the facial parameters of a reference template. Depending on the accuracy requirement, the specified degree may be selected, for example, to be between approximately 60% and approximately 90%. The image processing module 32 generates a result signal indicative of whether or not the user 2 is authorized, wherein the result signal is transmitted to the processor 40. If the user 2 is recognized as an authorized user, the method proceeds along the YES branch to a step **S6**; otherwise the method proceeds along the NO branch to the step **S8.**

At the step S6, the building action is registered for the user 2. The processor 40 analyzes the result signals and transmits the result to the controller system 18. Depending on the building and the implemented building system 1, the building action may be an elevator call, permission to access and/or a combination of elevator call and access permission.

Proceeding to a step **S7**, the building action is executed. For example, the control system 18 releases an access barrier, allocates an elevator to service the elevator call and causes the elevator car 14 to move according to the allocation. The method ends at step **S12.**

As mentioned above, the method proceeds to step **S8** if the user's body temperature is not within the preset temperature range, e. g., because the user 2 is feverish or because of an erroneous measurement. The processor 40 is configured to generate an alarm signal, which may be transmitted to the information device 20. In response, the information device 20 may generate an alarm that the user 2 and/or, for example, building personnel may see and/or hear. In one embodiment, the building action may be denied to the user 2 without further action; the method may then end at the step **S12.**

In another embodiment following the generation of the alarm at step **S8**, the method may initiate secondary processing. For example, building personnel may approach the user 2 and subject the user 2 to an additional measurement of the body temperature. This may be performed by means of a handheld non-contact infrared thermometer. If this additional measurement does not indicate an elevated body temperature (i. e., the infrared measurement was erroneous), building personnel may verify if the user 2 is authorized (e. g., by checking an ID card) and, if the user 2 is authorized, issue a substitute credential that may be linked to the user's profile. The substitute credential may be an access code, which may be printed on an access card, e. g., in form of an optical code, stored on an RFID-enabled access card or transmitted to the user's mobile phone for being displayed on the mobile phone. The user 2 may then present the substitute credential to the respective secondary readers 42, 46, and the method proceeds to the step **S6.** The substitute credential may expire (i. e., become invalid) after it has been presented once or after a set period of time (e. g., a few minutes).

The additional measurement, however, may confirm that the user 2 has an elevated body temperature. In this case, building personnel also verifies the user is authorized and issues a substitute credential, as mentioned above. In one embodiment, the substitute credential, however, is linked to a transport restriction if the user 2 wishes to use the elevator. For example, the transport restriction may require that the (feverish) user 2 travels alone in the elevator car 12 to reduce the risk that the user infects other users, or that the user 2 travels in an elevator car 14 together with other users 2 that have an elevated body temperature. The transport restriction may be coded in the substitute credential (access code) or stored in the user's profile. When the user 2 then presents the substitute credential to the respective secondary readers 42, 46, the method proceeds to the step **S6** in which the building action is registered in accordance with the transport restriction. That is, for example, the controller system 18 allocates an empty elevator car 14 to the user 2 and causes the elevator car 14 to move to the destination floor desired by the user 2 without any intermediate stop.

The verification of the user's authorization based on facial recognition technology may be prone to errors. This may be, for example, because the user's appearance changed (e. g., due to a hat, a beard or sunglasses), shadowing, incomplete view of the face, or bad lighting. If such an error occurs, the user 2 is not recognized as an authorized user and the method proceeds along the NO branch to the step **S8.** Similar to the handling of a measured elevated body temperature, the processor 40 is configured to generate an alarm signal, which may be transmitted to the information device 20, if the user 2 cannot be authorized at the step **S5**, as described above. In response, building personnel may approach the user 2 and subject the user 2 to an individual verification (e. g., by checking an ID card). If the user 2 is authorized, a substitute credential may be issued that may be linked to the user's profile, as described above. The user 2 may present the substitute credential to the respective secondary readers 42, 46, and the method proceeds to the step S6. If it is determined that the user 2 is not authorized, any building action is denied to the user 2, and the method ends in step **S12.**

In one embodiment, the method may be modified in that an additional temperature measurement is provided. This is indicated in **Fig. 3** through steps **S9-S11**; it is contemplated that these steps are optional. In one embodiment, the additional temperature measurement may take place in the elevator car 14, i. e., when the user 2 has boarded the elevator car 14. In yet another embodiment, the additional temperature measurement may take place at an elevator door 19 or in the immediate area in front of the elevator door 19, i. e., when the user 2 is about to board the elevator car 14. For the additional temperature measurement, a further thermographic camera 21 is provided, e. g., at the elevator door 19 or inside the elevator car 14. The analysis of the infrared image generated by the thermographic camera 21 corresponds to the analysis of the infrared image generated by the thermographic camera 24b, as described above.

Referring to the step **S9**, it is determined whether the body temperature of any user 2 that has boarded or is about to board the elevator car 14 is with the preset temperature range. If this is the case, the method proceeds along the YES branch to the step **S7**, otherwise the method proceeds along the NO branch to the step **S10.**

At the step **S10**, any building action that has been or is about to be initiated is interrupted. For example, if an elevator call has been registered at the step **S6** and an allocated elevator car 14 is about to depart from the boarding floor, departure of the elevator car 14 is blocked. In one embodiment, building personnel may be notified which may then perform a secondary processing, as indicated at the step **S11.** Building personnel may, for example, check the body temperatures of any present user and release the elevator car 14 from the blocked state only if the situation has been clarified. If this is not possible, the building action may be abandoned, otherwise the method proceeds then to the step **S7.**

The additional temperature measurement described with reference to the steps **S9-S11** provides additional level of confidence. For example, it reduces the risks involved when other users follow the user 2 without having the body temperatures checked.

According to the foregoing description of various embodiments of the improved technology, the building system 1 may respond to a feverish user 2 by executing one or more predetermined (mitigating) procedures. Such mitigating procedures may include
- denying the building action to the user 2, for example, the user 2 may be denied access to the building or access-restricted zone, or user of the elevator system,
- disabling the user terminal 4 for entry of an elevator call by the user 2,
- enabling the user terminal 4 for entry of an elevator call by the user 2 and refraining from registering the elevator call, wherein in the foregoing examples the user 2 may be informed (e. g., via the information device 20) about the denial or inability to enter an elevator call,
- notifying the user 2 (e. g., via the information device 20) about being subject to a secondary processing provided, for example, by building personnel, and, if the secondary processing results in the user 2 not having an elevated body temperature, providing the user 2 a secondary credential authorizing provisioning of the building service without a travel restriction, and
- notifying the user 2 (e. g., via the information device 20) about being subject to a secondary processing provided, for example, by building personnel, and, if the secondary processing confirms the user 2 having an elevated body temperature, providing the user 2 a secondary credential authorizing provisioning of the building service with a travel restriction, wherein the travel restriction includes that an empty elevator car 14 is assigned to the user 2 or that an elevator car 14 is assigned to the user 2 that is designated for transporting other users having elevator body temperatures.

Depending on how a building's management decides to handle feverish users, one or more of these procedures may be implemented in the building.

In the foregoing description, the secondary processing according to certain embodiments involves acts performed by building personnel. It is contemplated, that in other embodiments, the secondary processing may not involve building personnel, or may only involve building personnel at a reduced or minimum extent. In one embodiment, a self-service terminal (also referred to as a self-checking kiosk) may be provided in the building. In the course of the secondary processing, a user 2 may be required to go to such a self-service terminal and have the body temperature (re-)checked. In another embodiment, a robot may be provided to assist in or to perform the secondary processing. The robot may approach the user 2 having an increased body temperature, or the user 2 may be required to go to the robot, where the user's body temperature is measured. It is further contemplated that the self-service terminal or the robot may be used in case the initial authentication of the user 2 failed. For these purposes, the self-service terminal or the robot are equipped with suitable means to measure the body temperature. Further, the self-service terminal or the robot may be equipped to release a secondary credential (i. e. print QR, update profile ... etc).

## Claims

1. A building system (1), in particular an elevator system, a physical access control system or a combined elevator and physical access control system, comprising:
a controller system (18) configured to control the building system (1) to perform a building action;
a credential acquisition unit (24a) communicatively coupled to the controller system (1) and configured to acquire a credential presented by a user (2), wherein the credential determines whether or not the user (2) is an authorized user (2) within a building;
a camera system (24) having a thermographic camera (24b) configured to operate in an infrared optical spectrum and to generate an infrared image of at least a part of a face of the user (2);
an image processing system (6) communicatively coupled to the camera system (24) and the controller system (1), wherein the image processing system (6) is configured to process the infrared image to determine if it includes an area of the user's face having a temperature value that is higher than a set threshold temperature value and to generate a first result signal indicative of whether or not the temperature value is higher than the threshold temperature value; and
wherein the controller system (18) is configured to enable or disable the building action as a function of the acquired user credential and the first result signal,
**characterized in that**
the building action involves registering an elevator call and
wherein the elevator call is only registered if the user (2) is an authorized user and the first result signal indicates that the temperature value is lower than the threshold temperature value,
wherein the controller system (18) is configured to execute a mitigating procedure in response to the first result signal indicating that the user's face temperature value is higher than the threshold temperature value, wherein the mitigating procedure includes one of:
- disabling a user terminal (4) for entry of the elevator call by the user (2), and
- enabling the user terminal (4) for entry of the elevator call by the user (2) and refraining from registering the elevator call.

2. The building system (1) of claim 1, wherein the credential acquisition unit (24a) and the camera system (24) are arranged in a user terminal (4) accessible by the user (2).

3. The building system (1) of claim 1 or 2, wherein the credential acquisition unit (24a) includes at least one of a radio-frequency based reader (42) configured to read coded information from a radio-frequency based data carrier (48), a scanner (46) configured to process an optical code read from a data carrier (34) and an image capture device (24a) configured to acquire a biometric credential.

4. The building system (1) of any preceding claim, wherein the credential acquisition unit (24a) includes an image capture device (24a) configured to acquire a biometric credential, wherein the image capture device (24a) is arranged in the camera system (24) and communicatively coupled to the image processing system (6).

5. The building system (1) of claim 4, wherein the image capture device (24a) is configured to operate in a visible optical spectrum and to generate a digital image of at least a part of the user's face, wherein the image processing system (6) is configured to generate from the digital image a real-time facial template of facial features of the user (2), to compare the real-time facial template with a plurality of stored reference facial templates of facial features of authorized users and to generate a second result signal indicative of whether or not the real-time facial template matches one of the reference facial templates, and wherein the controller system (18) is configured to enable or disable the building action as a function of the first and second result signals.

6. The building system (1) of claim 5, further comprising a memory device (36) comprising a database (38) storing a plurality of user profiles, each user profile being assigned to a user (2) authorized to enjoy at least one specified building action.

7. The building system (1) of claim 6, wherein at least one of the user profiles includes a reference facial template of an authorized user (2), wherein the at least one user profile includes at least one access right and/or wherein the at least one user profile includes at least one default destination floor.

8. The building system (1) of claim 7, wherein the user terminal (4) further includes a first credential reader (42, 44) comprising a radio-frequency module (42) configured to communicate with a radio-frequency module of a first data carrier (48) presented by the user (2) and/or wherein the user terminal (4) further includes a second credential reader (46) comprising a camera (46) configured to obtain an optical code from a second data carrier (34) presented by the user (2).

9. The building system (1) of any preceding claim, further comprising an information device (20) configured to generate an alarm signal if the user (2) is, based on the credential presented to the credential acquisition unit (24a), not an authorized user and/or if the temperature value is higher than the threshold temperature value.

10. The building system (1) of any preceding claim, wherein the mitigating procedure includes one of:
- notifying the user (2) about being subject to a secondary processing, and, if the secondary processing results in the user (2) not having an elevated body temperature, providing the user (2) a secondary credential authorizing provisioning of the building service without a travel restriction, and
- notifying the user (2) about being subject to a secondary processing, and, if the secondary processing confirms the user (2) having an elevated body temperature, providing the user (2) a secondary credential authorizing provisioning of the building service with a travel restriction, wherein the travel restriction includes that an empty elevator car (14) is assigned to the user (2) or that an elevator car (14) is assigned to the user (2) that is designated for transporting other users having elevated body temperatures.

11. A method of operating a building system (1), in particular an elevator system, a physical access control system or a combined elevator and physical access control system installed in a building, the building system (1) comprising a controller system (18) configured to control the building system (1) to perform a building action, a credential acquisition unit (24a) communicatively coupled to the controller system (1), a camera system (24) having a thermographic camera (24b) configured to operate in an infrared optical spectrum, and an image processing system (6) communicatively coupled to the camera system (24) and the controller system (1), comprising:
acquiring, using the credential acquisition unit (24a), a credential presented by a user (2), wherein the credential determines whether or not the user (2) is an authorized user (2) within the building;
operating the thermographic camera (24b) to generate an infrared image of at least a part of a face of the user (2);
processing, using the image processing system (6), the infrared image to determine if it includes an area of the user's face having a temperature value that is higher than a set threshold temperature value and to generate a first result signal indicative of whether or not the temperature value is higher than the threshold temperature value; and
controlling the building system (1), by the controller system (18), to enable or disable the building action as a function of the acquired user credential and the first result signal,
**characterized in that** controlling the building system includes registering an elevator call only if the user (2) is an authorized user and the temperature value is lower than the threshold temperature value, and
wherein controlling the building system includes executing a mitigating procedure in response to the first result signal indicating that the user's face temperature value is higher than the threshold temperature value, wherein the mitigating procedure includes one of:
- disabling a user terminal (4) for entry of the elevator call by the user (2), and
- enabling a user terminal (4) for entry of an elevator call by the user (2) and refraining from registering the elevator call.

12. The method according to claim 11, further comprising processing, using the image processing system (6), a digital image of at least a part of the user's face, wherein the digital image is generated by an image capture device (24a) configured to operate in a visible optical spectrum, wherein the processing includes generating from the digital image a real-time facial template of facial features of the user (2), compare the real-time facial template with a plurality of stored reference facial templates of facial features of authorized users and to generate a second result signal indicative of whether or not the real-time facial template matches one of the reference facial templates, and wherein the controller system (18) is configured to enable or disable the building action as a function of the first and second result signals.

13. The method according to one of claims 11-12, wherein the mitigating procedure includes one of:
- notifying the user (2) about being subject to a secondary processing, and, if the secondary processing results in the user (2) not having an elevated body temperature, providing the user (2) a secondary credential authorizing provisioning of the building service without a travel restriction, and
- notifying the user (2) about being subject to a secondary processing, and, if the secondary processing confirms the user (2) having an elevated body temperature, providing the user (2) a secondary credential authorizing provisioning of the building service with a travel restriction, wherein the travel restriction includes that an empty elevator car (14) is assigned to the user (2) or that an elevator car (14) is assigned to the user (2) that is designated for transporting other users having elevated body temperatures.

## Patentansprüche

1. Gebäudesystem (1), insbesondere Aufzugssystem, physisches Zugangskontrollsystem oder kombiniertes Aufzugs- und physisches Zugangskontrollsystem, umfassend:
ein Steuerungssystem (18), das so konfiguriert ist, dass es das Gebäudesystem (1) steuert, um eine Gebäudeaktion auszuführen;
eine Berechtigungsnachweis-Erfassungseinheit (24a), die kommunikativ mit dem Steuerungssystem (1) gekoppelt und so konfiguriert ist, dass sie einen von einem Benutzer (2) vorgelegten Berechtigungsnachweis erfasst, wobei der Berechtigungsnachweis bestimmt, ob der Benutzer (2) ein autorisierter Benutzer (2) innerhalb eines Gebäudes ist oder nicht;
ein Kamerasystem (24) mit einer Wärmebildkamera (24b), die so konfiguriert ist, dass sie im optischen Infrarotspektrum arbeitet und ein Infrarotbild von mindestens einem Teil des Gesichts des Benutzers (2) erzeugt;
ein Bildverarbeitungssystem (6), das kommunikativ mit dem Kamerasystem (24) und dem Steuerungssystem (1) gekoppelt ist, wobei das Bildverarbeitungssystem (6) so konfiguriert ist, dass es das Infrarotbild verarbeitet, um zu bestimmen, ob es einen Bereich des Gesichts des Benutzers enthält, der einen Temperaturwert aufweist, der höher ist als ein festgelegter Schwellenwert, und um ein erstes Ergebnissignal zu erzeugen, das angibt, ob der Temperaturwert höher ist als der Schwellenwert; und
wobei das Steuerungssystem (18) so konfiguriert ist, dass es die Gebäudeaktion in Abhängigkeit von dem erfassten Berechtigungsnachweis und dem ersten Ergebnissignal aktiviert oder deaktiviert, **dadurch gekennzeichnet, dass** die Gebäudeaktion die Registrierung eines Aufzugsrufs umfasst und wobei der Aufzugsruf nur registriert wird, wenn der Benutzer (2) ein autorisierter Benutzer ist und das erste Ergebnissignal anzeigt, dass der Temperaturwert niedriger als der Schwellenwert ist,
wobei das Steuerungssystem (18) so konfiguriert ist, dass es als Reaktion auf das erste Ergebnissignal, das anzeigt, dass der Gesichtstemperaturwert des Benutzers höher als der Schwellenwert ist, ein Abhilfeverfahren ausführt, wobei das Abhilfeverfahren eines von:
- Deaktivieren eines Benutzerterminals (4) für die Eingabe des Aufzugsrufs durch den Benutzer (2) und
- Freigeben des Benutzerterminals (4) für die Eingabe das Aufzugsrufs durch den Benutzer (2) und Unterbinden der Registrierung des Aufzugsrufs umfasst.

2. Das Gebäudesystem (1) nach Anspruch 1, wobei die Berechtigungs-Erfassungseinheit (24a) und das Kamerasystem (24) in einem für den Benutzer (2) zugänglichen Benutzerterminal (4) angeordnet sind.

3. Das Gebäudesystem (1) nach Anspruch 1 oder 2, wobei die Berechtigungs-Erfassungseinheit (24a) mindestens eines der folgenden Elemente umfasst: ein auf Funk basierendes Lesegerät (42), das zum Lesen codierter Informationen von einem auf Funk basierenden Träger (48) konfiguriert ist, einen Scanner (46), der so konfiguriert ist, dass er einen von einem Träger (34) gelesenen optischen Code verarbeitet, und eine Bildaufnahmevorrichtung (24a), die so konfiguriert ist, dass sie einen biometrischen Berechtigungsnachweis erfasst.

4. Das Gebäudesystem (1) nach einem der vorstehenden Ansprüche, wobei die Berechtigungs-Erfassungseinheit (24a) eine Bildaufnahmevorrichtung (24a) umfasst, die so konfiguriert ist, dass sie einen biometrischen Berechtigungsnachweis erfasst, wobei die Bildaufnahmevorrichtung (24a) im Kamerasystem (24) angeordnet und kommunikativ mit dem Bildverarbeitungssystem (6) gekoppelt ist.

5. Das Gebäudesystem (1) nach Anspruch 4, wobei die Bildaufnahmevorrichtung (24a) so ausgelegt ist, dass sie im sichtbaren optischen Spektrum arbeitet und ein digitales Bild von zumindest einem Teil des Gesichts des Benutzers erzeugt, wobei das Bildverarbeitungssystem (6) so ausgelegt ist, dass es aus dem digitalen Bild eine Echtzeit-Gesichtsvorlage der Gesichtsmerkmale des Benutzers (2) erzeugt, die Echtzeit-Gesichtsvorlage mit einer Vielzahl von gespeicherten Referenz-Gesichtsvorlagen von Gesichtsmerkmalen autorisierter Benutzer vergleicht und ein zweites Ergebnissignal erzeugt, das angibt, ob die Echtzeit-Gesichtsvorlage mit einer der Referenz-Gesichtsvorlagen übereinstimmt oder nicht, und wobei das Steuerungssystem (18) so konfiguriert ist, dass es die Gebäudeaktion in Abhängigkeit von dem ersten und dem zweiten Ergebnissignal aktiviert oder deaktiviert.

6. Das Gebäudesystem (1) nach Anspruch 5, das ferner eine Speichervorrichtung (36) umfasst, die eine Datenbank (38) enthält, in der eine Vielzahl von Benutzerprofilen gespeichert ist, wobei jedes Benutzerprofil einem Benutzer (2) zugeordnet ist, der zur Nutzung mindestens einer bestimmten Gebäudeaktion berechtigt ist.

7. Das Gebäudesystem (1) nach Anspruch 6, wobei mindestens eines der Benutzerprofile eine Referenz-Gesichtsvorlage eines autorisierten Benutzers (2) enthält, wobei das mindestens ein Benutzerprofil mindestens ein Zugangsrecht enthält und/oder wobei das mindestens ein Benutzerprofil mindestens ein Standard-Stockwerk enthält.

8. Das Gebäudesystem (1) nach Anspruch 7, wobei das Benutzerterminal (4) ferner einen ersten Ausweisleser (42, 44) umfasst, der ein Funkfrequenzmodul (42) enthält, das so konfiguriert ist, dass es mit einem Funkfrequenzmodul eines ersten, vom Benutzer (2) vorgelegten Trägers (48) kommuniziert, und/oder wobei das Benutzerterminal (4) ferner einen zweiten Ausweislese (46) umfasst, der eine Kamera (46) enthält, die so konfiguriert ist, dass sie einen optischen Code von einem zweiten, vom Benutzer (2) vorgelegten Träger (34) erfasst.

9. Das Gebäudesystem (1) nach einem der vorstehenden Ansprüche, das ferner eine Informationseinheit (20) umfasst, die so konfiguriert ist, dass sie ein Alarmsignal erzeugt, wenn der Benutzer (2) auf der Grundlage des der Berechtigungsnachweis-Erfassungseinheit (24a) vorgelegten Berechtigungsnachweises kein autorisierter Benutzer ist und/oder wenn der Temperaturwert höher ist als der Schwellenwert für die Temperatur.

10. Das Gebäudesystem (1) nach einem der vorstehenden Ansprüche, wobei das Abhilfeverfahren eines von:
- Benachrichtigen des Benutzers (2) darüber, dass er einer sekundären Überprüfung unterzogen wird, und, falls die sekundäre Überprüfung ergibt, dass der Benutzer (2) keine erhöhte Körpertemperatur aufweist, dem Benutzer (2) einen sekundären Berechtigungsnachweis bereitzustellen, der die Bereitstellung des Dienstes für das Gebäude ohne Reisebeschränkung autorisiert, und
- Benachrichtigen des Benutzers (2) darüber, dass er einer sekundären Überprüfung unterzogen wird, und, falls die sekundäre Überprüfung bestätigt, dass der Benutzer (2) eine erhöhte Körpertemperatur aufweist, dem Benutzer (2) einen sekundären Berechtigungsnachweis bereitzustellen, der die Bereitstellung der Dienstleistung des Gebäudes mit einer Bewegungsbeschränkung autorisiert, wobei die Bewegungsbeschränkung beinhaltet, dass dem Benutzer (2) eine leere Aufzugskabine (14) zugewiesen wird oder dass dem Benutzer (2) eine Aufzugskabine (14) zugewiesen wird, die für den Transport anderer Benutzer mit erhöhten Aufzugskörpertemperaturen vorgesehen ist,
umfasst.

11. Verfahren zum Betreiben eines Gebäudesystems (1), insbesondere eines Aufzugssystems, eines physischen Zugangskontrollsystems oder eines kombinierten Aufzugs- und physischen Zugangskontrollsystems, das in einem Gebäude installiert ist, wobei das Gebäudesystem (1) ein Steuerungssystem (18) umfasst, das so konfiguriert ist, das Gebäudesystem (1) zu steuern, um eine Gebäudeaktion auszuführen, eine mit dem Steuerungssystem (1) kommunikativ verbundene Berechtigungsnachweis-Erfassungseinheit (24a), ein Kamerasystem (24) mit einer Wärmebildkamera (24b), die so konfiguriert ist, dass sie im optischen Infrarotspektrum arbeitet, und ein Bildverarbeitungssystem (6), das kommunikativ mit dem Kamerasystem (24) und dem Steuerungssystem (1) gekoppelt ist, umfassend:
Erfassen eines von einem Benutzer (2) vorgelegten Berechtigungsnachweises unter Verwendung der Berechtigungsnachweis-Erfassungseinheit (24a), wobei der Berechtigungsnachweis bestimmt, ob der Benutzer (2) ein autorisierter Benutzer (2) innerhalb des Gebäudes ist oder nicht;
Betreiben der Wärmebildkamera (24b), um ein Infrarotbild von mindestens einem Teil des Gesichts des Benutzers (2) zu erzeugen;
Verarbeiten des Infrarotbildes unter Verwendung des Bildverarbeitungssystems (6), um zu bestimmen, ob es einen Bereich des Gesichts des Benutzers enthält, der einen Temperaturwert aufweist, der höher ist als ein festgelegter Schwellenwert, und um ein erstes Ergebnissignal zu erzeugen, das angibt, ob der Temperaturwert höher ist als der Schwellenwert; und
Steuern des Gebäudesystems (1) durch das Steuerungssystem (18), um die Gebäudemaßnahme in Abhängigkeit von dem erfassten Berechtigungsnachweis und dem ersten Ergebnissignal zu aktivieren oder zu deaktivieren, **dadurch gekennzeichnet, dass** das Steuern des Gebäudesystems das Registrieren eines Aufzugsrufes nur dann umfasst, wenn der Benutzer (2) ein autorisierter Benutzer ist und der Temperaturwert unter dem Schwellenwert liegt, und
wobei die Steuerung des Gebäudesystems die Ausführung eines Abhilfeverfahrens als Reaktion auf das erste Ergebnissignal umfasst, das anzeigt, dass der Gesichtstemperaturwert des Benutzers höher als der Schwellenwert ist, wobei das Abhilfeverfahren eines von:
- Deaktivieren eines Benutzerterminals (4) für die Eingabe des Aufzugsrufs durch den Benutzer (2) und
- Freigeben eines Benutzerterminals (4) zur Eingabe eines Aufzugsrufs durch den Benutzer (2) und Unterbinden der Registrierung des Aufzugsrufs, umfasst.

12. Das Verfahren nach Anspruch 11, das ferner das Verarbeiten eines digitalen Bildes von zumindest einem Teil des Gesichts des Benutzers unter Verwendung des Bildverarbeitungssystems (6) umfasst, wobei das digitale Bild von einer Bildaufnahmevorrichtung (24a) erzeugt wird, die für den Betrieb im sichtbaren optischen Spektrum ausgelegt ist, wobei die Verarbeitung das Erzeugen einer Echtzeit-Gesichtsvorlage der Gesichtsmerkmale des Benutzers (2) aus dem digitalen Bild, Vergleichen der Echtzeit-Gesichtsvorlage mit einer Vielzahl von gespeicherten Referenz-Gesichtsvorlagen von Gesichtsmerkmalen autorisierter Benutzer und Erzeugen eines zweiten Ergebnissignals, das angibt, ob die Echtzeit-Gesichtsvorlage mit einer der Referenz-Gesichtsvorlagen übereinstimmt oder nicht, und wobei die Steuerung (18) so konfiguriert ist, dass sie die Gebäudeaktion in Abhängigkeit von dem ersten und dem zweiten Ergebnissignal aktiviert oder deaktiviert.

13. Verfahren nach einem der Ansprüche 11-12, wobei das Abhilfeverfahren eines von:
- Benachrichtigen des Benutzers (2) darüber, dass er einer sekundären Verarbeitung unterzogen wird, und, falls die sekundäre Verarbeitung ergibt, dass der Benutzer (2) keine erhöhte Körpertemperatur aufweist, Bereitstellen eines sekundären Berechtigungsnachweises für den Benutzer (2), der die Bereitstellung des Dienstes für das Gebäude ohne Reisebeschränkung autorisiert, und
- Benachrichtigen des Benutzers (2) darüber, dass er einer sekundären Überprüfung unterzogen wird, und, falls die sekundäre Überprüfung bestätigt, dass der Benutzer (2) eine erhöhte Körpertemperatur aufweist, Bereitstellen eines sekundären Berechtigungsnachweises für den Benutzer (2), der die Bereitstellung des Dienstes für das Gebäude mit einer Bewegungsbeschränkung autorisiert, wobei die Bewegungsbeschränkung beinhaltet, dass dem Benutzer (2) eine leere Aufzugskabine (14) zugewiesen wird oder dass dem Benutzer (2) eine Aufzugskabine (14) zugewiesen wird, die für den Transport anderer Benutzer mit erhöhter Körpertemperatur vorgesehen ist,
umfasst.

## Revendications

1. Système de bâtiment (1), en particulier un système d'ascenseur, un système de contrôle d'accès physique ou un système combiné d'ascenseur et de contrôle d'accès physique, comprenant :
un contrôleur (18) configuré pour contrôler le système de bâtiment (1) afin d'exécuter une action de bâtiment ;
une unité d'acquisition d'identifiant (24a) couplée de manière communicative au contrôleur (1) et configurée pour acquérir un identifiant présenté par un utilisateur (2), dans lequel l'identifiant détermine si l'utilisateur (2) est ou non un utilisateur autorisé (2) au sein d'un bâtiment ;
un système de caméra (24) comportant une caméra thermographique (24b) configurée pour fonctionner dans un spectre optique infrarouge et pour générer une image infrarouge d'au moins une partie du visage de l'utilisateur (2) ;
un système de traitement d'images (6) couplé de manière communicative au système de caméra (24) et au système de contrôleur (1), dans lequel le système de traitement d'images (6) est configuré pour traiter l'image infrarouge afin de déterminer si celle-ci comprend une zone du visage de l'utilisateur ayant une valeur de température supérieure à une valeur de température seuil définie et pour générer un premier signal de résultat indiquant si la valeur de température est supérieure ou non à la valeur de température seuil ; et
dans lequel le contrôleur (18) est configuré pour activer ou désactiver l'action de bâtiment en fonction des identifiants d'utilisateur acquis et du premier signal de résultat, **caractérisé en ce que** l'action de bâtiment implique l'enregistrement d'un appel d'ascenseur et dans lequel l'appel d'ascenseur n'est enregistré que si l'utilisateur (2) est un utilisateur autorisé et si le premier signal de résultat indique que la valeur de température est inférieure à la valeur de température seuil,
dans lequel le contrôleur (18) est configuré pour exécuter une procédure d'atténuation en réponse au premier signal de résultat indiquant que la valeur de température faciale de l'utilisateur est supérieure à la valeur de température seuil, dans lequel la procédure d'atténuation comprend l'une des opérations suivantes :
- désactiver un terminal utilisateur (4) pour la saisie d'appel pour l'ascenseur automoteur par l'utilisateur (2), et
- activer le terminal utilisateur (4) pour permettre à l'utilisateur (2) de passer l'appel d'ascenseur et s'abstenir d'enregistrer l'appel d'ascenseur.

2. Système de bâtiment (1) selon la revendication 1, dans lequel l'unité d'acquisition d'identifiants (24a) et le système de caméra (24) sont disposés dans un terminal utilisateur (4) accessible par l'utilisateur (2).

3. Système de bâtiment (1) selon la revendication 1 ou 2, dans lequell l'unité d'acquisition d'identifiant (24a) comprend au moins l'un des éléments suivants : un lecteur à radiofréquence (42) configuré pour lire des informations codées à partir d'un support de données à radiofréquence (48), un scanner (46) configuré pour traiter un code optique lu à partir d'un support de données (34) et un dispositif de capture d'image (24a) configuré pour acquérir une information d'identification biométrique.

4. Système de bâtiment (1) selon l'une quelconque des revendications précédentes, dans lequel l'unité d'acquisition d'identifiant (24a) comprend un dispositif de capture d'image (24a) configuré pour acquérir un identifiant biométrique, dans lequel le dispositif de capture d'image (24a) est disposé dans le système de caméra (24) et couplé de manière communicative au système de traitement d'image (6).

5. Système de construction (1) selon la revendication 4, dans lequel le dispositif de capture d'images (24a) est configuré pour fonctionner dans le spectre optique visible et pour générer une image numérique d'au moins une partie du visage de l'utilisateur, dans lequel le système de traitement d'images (6) est configuré pour générer, à partir de l'image numérique, un modèle facial en temps réel des traits du visage de l'utilisateur (2), à comparer le modèle facial en temps réel à une pluralité de modèles faciaux de référence stockés représentant les traits du visage des utilisateurs autorisés et à générer un deuxième signal de résultat indiquant si le modèle facial en temps réel correspond ou non à l'un des modèles faciaux de référence, et dans lequel le contrôleur (18) est configuré pour activer ou désactiver l'action de construction en fonction des premier et deuxième signaux de résultat.

6. Le système de gestion (1) selon la revendication 5, comprenant en outre un dispositif de mémoire (36) comprenant une base de données (38) stockant une pluralité de profils d'utilisateurs, chaque profil d'utilisateur étant attribué à un utilisateur (2) autorisé à bénéficier d'au moins une action de gestion spécifiée.

7. Le système de bâtiment (1) selon la revendication 6, dans lequel au moins l'un des profils d'utilisateur comprend un modèle facial de référence d'un utilisateur autorisé (2), dans lequel ledit au moins un profil d'utilisateur comprend au moins un droit d'accès et/ou dans lequel ledit au moins un profil d'utilisateur comprend au moins un étage de destination par défaut.

8. Système de gestion de bâtiment (1) selon la revendication 7, dans lequel le terminal utilisateur (4) comprend en outre un premier lecteur de titres d'accès (42, 44) comprenant un module radiofréquence (42) configuré pour communiquer avec un module radiofréquence d'un premier support de données (48) présenté par l'utilisateur (2) et/ou dans lequel le terminal utilisateur (4) comprend en outre un deuxième lecteur de justificatif (46) comprenant une caméra (46) configurée pour obtenir un code optique à partir d'un deuxième support de données (34) présenté par l'utilisateur (2).

9. Système de bâtiment (1) selon l'une quelconque des revendications précédentes, comprenant en outre un dispositif d'information (20) configuré pour générer un signal d'alarme si l'utilisateur (2) n'est pas, sur la base de l'identifiant présenté à l'unité d'acquisition d'identifiant (24a), un utilisateur autorisé et/ou si la valeur de température est supérieure à la valeur de température seuil.

10. Système de bâtiment (1) selon l'une quelconque des revendications précédentes, dans lequel la procédure d'atténuation comprend l'une des actions suivantes :
- notifier l'utilisateur (2) qu'il fait l'objet d'un traitement secondaire et, si ce traitement secondaire montre que l'utilisateur (2) ne présente pas de température corporelle élevée, fournir à l'utilisateur (2) un identifiant secondaire autorisant l'accès au service du bâtiment sans restriction de déplacement, et
- notifier l'utilisateur (2) qu'il fait l'objet d'un traitement secondaire, et, si le traitement secondaire confirme que l'utilisateur (2) présente une température corporelle élevée, fournir à l'utilisateur (2) d'un identifiant secondaire autorisant l'accès au service du bâtiment avec une restriction de déplacement, dans lequel la restriction de déplacement consiste à attribuer à l'utilisateur (2) une cabine d'ascenseur (14) vide ou à attribuer à l'utilisateur (2) une cabine d'ascenseur (14) destinée au transport d'autres utilisateurs présentant une température corporelle normale.

11. Procédé d'exploitation d'un système de bâtiment (1), en particulier d'un système d'ascenseur, d'un système de contrôle d'accès physique ou d'un système combiné d'ascenseur et de contrôle d'accès physique installé dans un bâtiment, le système de bâtiment (1) comprenant un système de commande (18) configuré pour commander le système de bâtiment (1) afin d'exécuter une action du bâtiment, une unité d'acquisition d'identifiants (24a) couplée de manière communicative au système de commande (1), un système de caméra (24) comportant une caméra thermographique (24b) configurée pour fonctionner dans un spectre optique infrarouge, et un système de traitement d'images (6) couplé de manière communicative au système de caméra (24) et au contrôleur (1), comprenant :
l'acquisition, à l'aide de l'unité d'acquisition d'identifiant (24a), d'un identifiant présenté par un utilisateur (2), l'identifiant déterminant si l'utilisateur (2) est ou non un utilisateur autorisé (2) au sein du bâtiment ;
faire fonctionner la caméra thermographique (24b) pour générer une image infrarouge d'au moins une partie du visage de l'utilisateur (2) ;
le traitement, à l'aide du système de traitement d'images (6), de l'image infrarouge afin de déterminer si elle comprend une zone du visage de l'utilisateur présentant une valeur de température supérieure à une valeur de température seuil prédéfinie et de générer un premier signal de résultat indiquant si la valeur de température est supérieure ou non à la valeur de température seuil ; et
commander le système du bâtiment (1), par le système de commande (18), pour activer ou désactiver l'action du bâtiment en fonction des informations d'identification acquises de l'utilisateur et du premier signal de résultat, **caractérisé en ce que** le contrôleur du système du bâtiment comprend l'enregistrement d'un appel d'ascenseur uniquement si l'utilisateur (2) est un utilisateur autorisé et si la valeur de température est inférieure à la valeur de température seuil, et
dans lequel le contrôleur du système de bâtiment comprend l'exécution d'une procédure d'atténuation en réponse au premier signal de résultat indiquant que la valeur de température faciale de l'utilisateur est supérieure à la valeur de température seuil, dans laquelle la procédure d'atténuation comprend l'une des actions suivantes :
- la désactivation d'un terminal utilisateur (4) pour la saisie de l'appel d'ascenseur par l'utilisateur (2), et
- activer un terminal utilisateur (4) pour la saisie d'une demande d'ascenseur par l'utilisateur (2) et s'abstenir d'enregistrer la demande d'ascenseur.

12. Procédé selon la revendication 11, comprenant en outre le traitement, à l'aide du système de traitement d'images (6), d'une image numérique d'au moins une partie du visage de l'utilisateur, dans lequel l'image numérique est générée par un dispositif de capture d'images (24a) configuré pour fonctionner dans le spectre optique visible, dans lequel le traitement comprend la génération, à partir de l'image numérique, d'un modèle facial en temps réel des traits du visage de l'utilisateur (2), comparer le modèle facial en temps réel à une pluralité de modèles faciaux de référence stockés représentant les traits du visage des utilisateurs autorisés et générer un deuxième signal de résultat indiquant si le modèle facial en temps réel correspond ou non à l'un des modèles faciaux de référence, et dans lequel le contrôleur (18) est configuré pour activer ou désactiver l'action du bâtiment en fonction des premier et deuxième signaux de résultat.

13. Procédé selon l'une des revendications 11 à 12, dans lequel la procédure d'atténuation comprend l'une des actions suivantes :
- notifier l'utilisateur (2) qu'il fait l'objet d'un traitement secondaire, et, si le traitement secondaire montre que l'utilisateur (2) ne présente pas de température corporelle élevée, fournir à l'utilisateur (2) un identifiant secondaire autorisant l' la fourniture du service du bâtiment sans restriction de déplacement, et
- en informant l'utilisateur (2) qu'il fait l'objet d'un traitement secondaire et, si ce traitement secondaire confirme que l'utilisateur (2) présente une température corporelle élevée, en fournissant à l'utilisateur (2) d'un identifiant secondaire autorisant l'accès au service du bâtiment avec une restriction de déplacement, ladite restriction de déplacement prévoyant qu'une cabine d'ascenseur (14) vide soit attribuée à l'utilisateur (2) ou qu'une cabine d'ascenseur (14) soit attribuée à l'utilisateur (2) qui est destinée au transport d'autres utilisateurs présentant une température corporelle élevée.
